# FASCICULE DE BREVET EUROPEEN

(11) **EP 3 132 007 B1**
(45) Date de publication et mention de la délivrance du brevet: **17.06.2020**
(21) Numéro de dépôt: 15715290.1
(22) Date de dépôt: 14.04.2015
(51) Int. Cl.: C10K 1/04, C10K 1/32

(54) **PROCÉDÉ DE TRAITEMENT D'UN GAZ DE SYNTHÈSE PROVENANT D'UNE ÉTAPE DE GAZÉIFICATION**
VERFAHREN ZUR BEHANDLUNG VON SYNTHESEGAS AUS GASIFIZIERUNG
METHOD FOR TREATMENT OF SYNTHESIS GAS FROM GASIFICATION

(30) Priorité: 14.04.2014 FR 1453328
(43) Date de publication de la demande: 22.02.2017
(73) Titulaire: ENGIE, 92400 Courbevoie (FR)
(72) Inventeur: LEGRAND, Frédéric, F-75013 Paris (FR); KARA, Yilmaz, F-95600 Eaubonne (FR); MARCHAND, Bernard, F-75018 Paris (FR)
(74) Mandataire: Cornuejols, Georges
(86) Numéro de dépôt international: PCT/EP2015/058108
(87) Numéro de publication internationale: WO 2015/158737

(56) Documents cités:
- EP-A2- 0 444 684
- EP-A2- 0 583 981
- DE-C- 882 541
- FR-A- 1 360 112
- US-A- 4 696 680
- US-A- 5 152 976
- US-A1- 2010 111 824

## Description

### DOMAINE TECHNIQUE DE L'INVENTION

La présente invention vise un procédé de traitement d'un gaz de synthèse provenant d'une étape de gazéification. Elle s'applique notamment à la gazéification de combustibles hydrocarbonés pour la production de biométhane.

### ETAT DE LA TECHNIQUE

La production de biométhane dite de deuxième génération est basée sur la gazéification de biomasse ligno-cellulosique et la méthanation catalytique du gaz de synthèse, ou « syngas » (contraction de « synthetic gas », traduit en français par « gaz synthétique »), ainsi produit.

Entre l'étape de gazéification de biomasse et l'étape de méthanation catalytique, le gaz synthétique doit être épuré afin :
- d'optimiser le rendement de l'étape de méthanation et
- d'éviter une désactivation rapide du catalyseur nécessaire à la conversion réalisée au cours de la méthanation.

En effet, en sortie de l'étape de gazéification, le gaz synthétique comporte :
- des impuretés organiques, par exemple de type goudrons, et des résidus de gazéification et
- des polluants inorganiques, comme du sulfure d'hydrogène, de l'oxysulfure de carbone, de l'ammoniac ou d'acide chlorhydrique par exemple.

Les impuretés organiques et les résidus de gazéification peuvent entrainer le colmatage ou l'abrasion de conduites dans lesquels ces impuretés et résidus sont mis en circulation. De plus, ces impuretés et résidus peuvent provoquer la désactivation d'un catalyseur de méthanation, traditionnellement construit à base de nickel, sur lequel a lieu la réaction de méthanation.

Les polluants inorganiques peuvent désactiver de manière irréversible un catalyseur de méthanation ou accélérer la corrosion des équipements avec lesquels ces polluants sont en contact.

Les systèmes actuels d'élimination ou de réduction des impuretés organiques ou des polluants inorganiques du gaz synthétique se divisent en deux catégories. Les systèmes dits « primaires » visent à diminuer la quantité de goudrons produits en jouant sur la géométrie, les conditions opératoires ou les catalyseurs et additifs du réacteur responsable de la conversion de la biomasse. Les systèmes dits « secondaires » correspondent à toutes les unités installées en aval du réacteur responsable de la gazéification de biomasse et font appel à des procédés classiques de séparation. Ces procédés classiques peuvent être, par exemple, de type lavage humide, lavage sec ou traitement du gaz à haute température. Les systèmes primaires ne permettent, actuellement, pas d'éviter l'utilisation de systèmes secondaires complémentaires.

L'homme du métier connait en particulier des installations dites de « Gussing », dont le nom provient de la ville dans laquelle est installé un dispositif de gazéification de référence. Ces installations comportent des moyens d'épuration secondaires disposés en sortie du réacteur de gazéification. Ces moyens comportent ainsi :
- un dispositif de refroidissement du gaz de synthèse permettant de récupérer la chaleur latente du gaz de synthèse au profit d'un réseau de chaleur urbain,
- un filtre à particules permettant de piéger les particules solides présentes dans le gaz de synthèse et
- un dispositif de lavage du gaz (dit « scrubber », en anglais) avec du biodiesel pour séparer les impuretés du gaz de synthèse.

Ce dispositif n'est pas actuellement satisfaisant car les impuretés saturent rapidement le biodiesel.

Dans un cas comme dans l'autre, l'épuration du gaz synthétique se fait au détriment du rendement global de l'installation.

Le brevet EP0444684 enseigne un procédé de conversion de déchets solides en une synthèse appropriée pour produire du combustible liquide.

Il est également connu du brevet EP2445998 un dispositif et un procédé d'épuration du gaz synthétique. Selon ce document, le procédé utilisé comporte quatre étapes :
- une étape de refroidissement du gaz de synthèse,
- une étape de lavage du gaz de synthèse par une huile,
- une étape de régénération de l'huile et
- une étape de traitement du gaz lavé par un adsorbant catalytique.

L'étape de refroidissement permet, en particulier, de séparer les composés les plus lourds du gaz de synthèse mais également de porter le gaz de synthèse à une température optimale pour le lavage. L'étape de lavage du gaz de synthèse par une huile permet de réaliser une adsorption des composés organiques du flux gazeux. L'étape de traitement du gaz par un adsorbant catalytique permet d'adsorber les goudrons résiduels les plus légers ainsi que les composés inorganiques.

Cependant, l'adsorption utilisée au cours de l'étape de lavage comporte un certain nombre de limites, notamment car le solvant utilisé doit répondre à un certain nombre de caractéristiques complexes, comme par exemple disposer d'une forte affinité vis-à-vis des composés à éliminer, d'une faible viscosité, d'une pression de vapeur élevée. De plus, les dimensions de l'absorbeur utilisé au cours de l'adsorption sont complexes à estimer en raison d'un manque de connaissance sur les données thermodynamiques d'équilibre liquide-vapeur des systèmes composés organiques/eau/solvant utilisés. Finalement, la régénération de l'huile utilisée au cours de l'étape de lavage engendre des effluents à traiter et nécessitent donc une unité de traitement de l'eau souillée. Ce procédé nécessite un absorbeur à huile, dont l'huile est régénérée et un adsorbeur catalytique. Le volume de déchets produit reste donc important et la régénération des huiles se fait également au détriment du rendement global de l'installation.

Pour l'ensemble de ces raisons, les systèmes actuels ne permettent pas d'optimiser le rendement de la conversion du carbone en gaz synthétique ni la minimisation des rejets de l'unité réalisant la production de gaz synthétique.

### OBJET DE L'INVENTION

La présente invention vise à remédier à tout ou partie de ces inconvénients.

A cet effet, la présente invention vise un procédé de traitement d'un gaz de synthèse provenant d'une étape de gazéification, qui comporte :
- une étape de refroidissement du gaz de synthèse pour condenser des impuretés organiques lourdes et de l'eau,
- une étape d'adsorption, en sortie de l'étape de refroidissement, d'impuretés organiques légères et d'impuretés inorganique par au moins un lit d'adsorption,
- une étape de séparation par décantation de l'eau et des goudrons lourds issus de l'étape de refroidissement du gaz de synthèse et
- une étape de régénération d'au moins un lit d'adsorption par désorption modulée en température comportant une étape d'injection d'un gaz chaud contre chaque dit lit d'adsorption, le gaz chaud étant de la vapeur surchauffée ou, un gaz pur ou un mélange de gaz choisi parmi C=2, CH4, H2, CO, à une température comprise entre 110°C et 250°C et avec un débit volumique de vapeur surchauffée ou gaz 3 à 5 fois inférieur à un débit volumique de gaz de synthèse.

En réalisant directement l'étape d'adsorption en sortie de l'étape de refroidissement, on élimine le lavage avec un solvant et la régénération du solvant. Ces dispositions permettent de réduire le coût d'installation et d'exploitation d'une unité de production d'un gaz de synthèse. De plus, ces dispositions permettent de réduire l'impact environnemental du dispositif et à limiter la consommation énergétique du dispositif. De plus, la présence de plusieurs lits d'adsorption permet d'assurer la continuité du traitement grâce à une routine automatique simplifiée d'utilisation des différents lits.

De plus, la consommation énergétique est réduite. En effet, les huiles issues de l'adsorption sont difficiles et coûteuses à régénérer puisque les techniques dites de « stripping » (traduit par « arrachage » en français) ou de distillation nécessitent de grandes quantités énergétiques liées au besoin de vaporisation de ces techniques. Dans le cas de l'adsorption, les liens sont plus faibles entre les medias du lit d'adsorption et les impuretés.

Dans des modes de réalisation, le gaz de synthèse est refroidit entre 5°C et 30°C au cours de l'étape de refroidissement.

Dans des modes de réalisation, le gaz de synthèse est refroidit entre 5°C et 10°C.

Ces températures permettent d'atteindre la température du point de rosée des goudrons lourds et de l'eau.

Dans des modes de réalisation, le procédé objet de la présente invention comporte une étape de refroidissement de l'eau de décantation, issue de l'étape de séparation, entre 5°C et 30°C, l'eau de décantation refroidie étant utilisée pour l'étape de refroidissement du gaz de synthèse.

Ces modes de réalisation permettent de limiter la consommation en eau du procédé.

Dans des modes de réalisation, au cours de l'étape de refroidissement de l'eau, l'eau de décantation issue de l'étape de séparation est refroidie entre 5°C et 10°C.

Ces températures permettent d'atteindre la température du point de rosée des goudrons lourds et de l'eau.

Ainsi, la régénération est réalisée en un temps inférieur ou égal au temps de saturation du lit d'adsorption.

Dans des modes de réalisation, une partie des produits issus de l'étape de régénération est utilisée dans l'étape de séparation par décantation.

Dans des modes de réalisation, l'étape de régénération est effectuée simultanément, au moins partiellement, à l'étape d'adsorption.

Ces modes de réalisation ont l'avantage de permettre une optimisation du rendement du procédé. Préférentiellement, le procédé utilise au moins deux lits alternant une étape d'adsorption et une étape de régénération.

Dans des modes de réalisation, l'étape de régénération comporte une étape de désorption du lit d'adsorption.

Ces modes de réalisation ont l'avantage de permettre une régénération efficiente du lit d'adsorption. De plus, ces modes de réalisation ont l'avantage d'augmenter le rendement du procédé.

Dans des modes de réalisation, l'étape de régénération comporte une étape de refroidissement d'un lit d'adsorption qui est effectuée simultanément, au moins partiellement, à l'étape d'adsorption et simultanément, au moins partiellement, à l'étape de désorption d'un lit d'adsorption.

L'avantage de ces modes de réalisation est qu'ils permettent d'augmenter le rendement du procédé. De plus, dans des modes de réalisation préférentiels, le procédé met en œuvre trois lits d'adsorption réalisant à tour de rôle une séquence d'étapes d'adsorption, de régénération et de refroidissement de sorte qu'à tout un instant un seul lit réalise l'une de ces étapes.

Dans des modes de réalisation, le procédé objet de la présente invention comporte une étape de permutation entre un premier lit d'adsorption réalisant l'étape d'adsorption et au moins un deuxième lit d'adsorption réalisant une étape de régénération.

L'avantage de ces modes de réalisation est qu'ils permettent une continuité dans l'adsorption appliquée à un gaz de synthèse, tout en permettant une adsorption optimale des impuretés du gaz.

Dans des modes de réalisation, l'étape de régénération d'un lit d'adsorption comporte une étape de décantation de goudrons récoltés au cours de l'étape de refroidissement.

Ces modes de réalisation ont l'avantage de permettre une meilleure utilisation des goudrons récoltés. Ces modes de réalisation ont l'avantage de permettre une séparation de l'eau condensée et des goudrons récoltés, le volume d'effluents contenant des goudrons est également réduit par ce biais. Par ailleurs, ce mode de réalisation permet de valoriser les BTX.

Dans des modes de réalisation, la régénération du lit d'adsorption est réalisée par injection d'un gaz inerte dans le lit d'adsorption.

### BREVE DESCRIPTION DES FIGURES

D'autres avantages, buts et caractéristiques particulières de l'invention ressortiront de la description non limitative qui suit d'au moins un procédé de traitement d'un gaz de synthèse provenant d'une étape de gazéification objet de la présente invention, en regard des dessins annexés, dans lesquels :
- la figure 1 représente, un logigramme d'étapes d'un mode de réalisation particulier du procédé objet de la présente invention et
- la figure 2 représente, schématiquement, un mode de réalisation particulier du dispositif.

### DESCRIPTION D'EXEMPLES DE REALISATION DE L'INVENTION

La présente description est donnée à titre non limitatif.

On note, dès à présent, que les figures ne sont pas à l'échelle.

On note également, dès à présent, que les formulations « un » ou « une » dans la description ci-dessous désignent « au moins un » ou « au moins une » et ne sont utilisées que par soucis de clarté. En outre, ces formulations peuvent être remplacées par « une pluralité ».

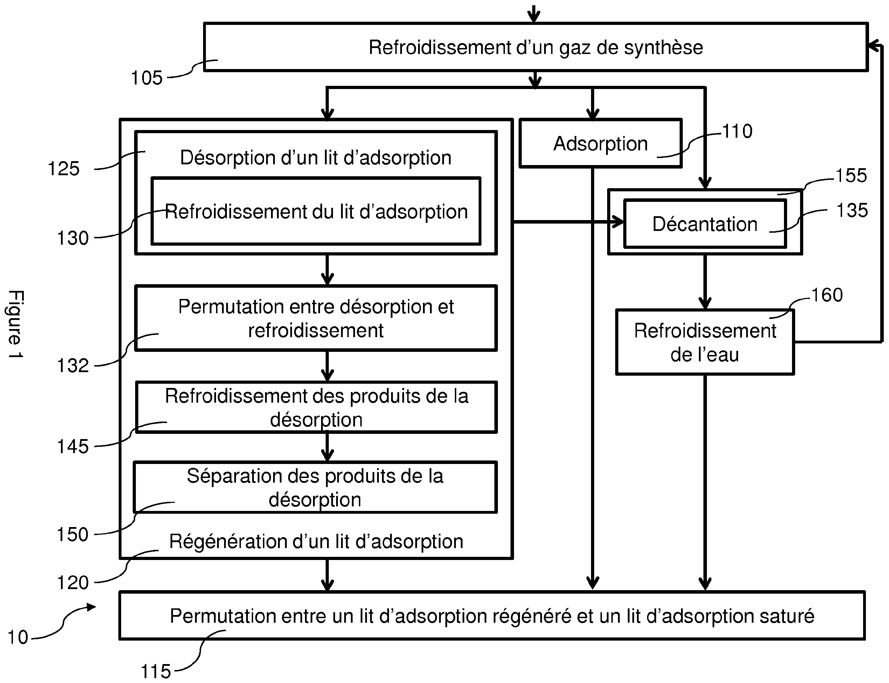

On observe, sur la figure 1, un mode de réalisation du procédé 10 de traitement d'un gaz de synthèse provenant d'une étape de gazéification de biomasse objet de la présente invention. Ce procédé 10 comporte :
- une étape 105 de refroidissement du gaz de synthèse,
- une étape 110 d'adsorption du gaz de synthèse par un lit d'adsorption,
- une étape 120 de régénération d'un lit d'adsorption par désorption modulée en température, pouvant être réalisée simultanément à l'étape 110 d'adsorption, comportant :
   - une étape 125 de désorption d'un lit d'adsorption comportant une étape 130 de refroidissement des produits de la désorption,
   - une étape 140 de permutation entre un lit réalisant l'étape 125 de désorption et un lit réalisant l'étape 130 de refroidissement,
   - une étape 145 de refroidissement des produits de l'étape 125 de désorption et
   - une étape 150 de séparation des produits refroidis et
- une étape 115 de permutation entre un lit d'adsorption régénéré et un lit d'adsorption saturé et
- une étape 155 de séparation par décantation 135 de l'eau et des goudrons lourds issus de l'étape 105 de refroidissement du gaz de synthèse et

L'étape de refroidissement 105 est réalisée, par exemple, par la mise en œuvre d'un condenseur permettant la séparation de goudrons transportés par le flux de gaz de synthèse. Ce condenseur diminue la température du gaz de synthèse pour une pression donnée de manière à atteindre la température du point de rosée des goudrons lourds et de l'eau. Ce condenseur est un contacteur direct gaz / liquide, par exemple une colonne garnie, un laveur venturi ou une colonne à plateau. Ce condenseur est également associé à un moyen de réfrigération et à un moyen d'échange thermique tel un échangeur de chaleur, par exemple. Dans des variantes, le gaz de synthèse refroidit au cours de l'étape de refroidissement 105 est de nouveau entré dans le refroidisseur, de manière à augmenter le rendement de cette étape 105.

Avantageusement, l'étape 105 de refroidissement est réalisée grâce à un lavage (dit « quenching », en anglais) du gaz de synthèse par de l'eau refroidie. Le lavage permet la condensation de la vapeur d'eau et des goudrons lourds présents dans le gaz de synthèse. Le résidu du lavage est ensuite traité par décantation. Le refroidissement est réalisé à une température entre 5°C et 30 °C et de préférence entre 5 et 10°C. La pression de fonctionnement du lavage est réalisée en légère surpression par rapport à l'atmosphère et à une pression proche de la pression du réacteur de gazéification qui produit le gaz de synthèse.

Le gaz de synthèse est refroidit entre 5°C et 30°C au cours de l'étape 105 de refroidissement. Préférentiellement, le gaz de synthèse est refroidit entre 5°C et 10°C.

Les produits issus de l'étape de refroidissement 105 sont ensuite séparés par décantation. L'eau est préférablement réutilisée pour l'étape de refroidissement 105, après refroidissement, et les goudrons lourds sont éliminés.

Dans des modes de réalisation, le procédé 10 comporte une étape 160 de refroidissement de l'eau de décantation, issue de l'étape de séparation 155, entre 5°C et 30°C, l'eau de décantation refroidie étant utilisée pour l'étape 105 de refroidissement du gaz de synthèse.

Dans des variantes, au cours de l'étape 160 de refroidissement de l'eau, l'eau de décantation issue de l'étape 155 de séparation est refroidie entre 5°C et 10°C.

L'étape d'adsorption 110 est réalisée, par exemple, par la mise en œuvre d'au moins un lit d'adsorption qui comporte, par exemple, des charbons actifs, des zéolites ou des adsorbants polymères. La température de ce lit est choisie pour permettre une adsorption forte des goudrons légers et des impuretés inorganiques transportés par le gaz de synthèse en sortie de l'étape de refroidissement 105. Au cours de cette étape d'adsorption 110, le gaz de synthèse en sortie de l'étape de refroidissement 105 traverse le lit d'adsorption afin de récolter des goudrons et des composés inorganiques charriés par le gaz de synthèse. En particulier, ce mode de réalisation du procédé 10 objet de la présente invention comporte une pluralité d'étapes d'adsorption 110 réalisées, par exemple, par une mise en série ou en parallèle de lits d'adsorbants. Cette pluralité d'étapes d'adsorption 110 permet une plus grande flexibilité du procédé 10 d'épuration. Dans des modes de réalisation, le procédé 10 met en œuvre au moins deux lit d'adsorption. Pendant que l'un de ces lits réalise une adsorption sur le gaz de synthèse, au moins un autre lit réalisant l'étape de régénération 120. Dans des modes de réalisation préférentiels, le procédé 10 met en œuvre trois lits d'adsorption. Pendant que l'un de ces lits réalise une adsorption sur le gaz de synthèse, un autre lit réalisant l'étape de désorption 125 et le troisième lit réalise l'étape de refroidissement 130.

L'étape de régénération d'un lit d'adsorption 120 est réalisée, par exemple, par la réalisation d'une étape 125 de désorption d'un lit d'adsorption saturé. Cette étape de désorption 125 est, par exemple, réalisée, pour les composés organiques, par la diminution de la pression et de l'augmentation de la température à laquelle le lit d'adsorption est exposé. On introduit également de la vapeur d'eau, chauffée par exemple à 140 °C, dans un moyen de désorption dans lequel est réalisée l'étape de désorption 125.

L'étape 120 de régénération est réalisée par injection d'un fluide chaud contre chaque dit lit d'adsorption. Le fluide chaud est de la vapeur surchauffée à une température comprise entre 110°C et 250°C et avec un débit volumique de vapeur surchauffée 3 à 5 fois inférieur à un débit volumique de gaz de synthèse, ou le fluide chaud est un gaz pur ou un mélange de gaz choisi parmi CO₂, CH₄, H₂, CO à une température comprise entre 110°C et 250°C et avec un débit volumique de gaz 3 à 5 fois inférieur à un débit volumique de gaz de synthèse.

Le débit considéré ici est le débit de gaz de synthèse à traiter par le procédé 10.

Dans des modes de réalisation, une partie des produits issus de l'étape de régénération 120 est utilisée pour la décantation 135 du gaz de synthèse.

Dans des modes de réalisation, la régénération 120 du lit d'adsorption est réalisée par injection d'un gaz inerte dans le lit d'adsorption.

Le procédé 10 comporte un étape 130 de refroidissement du lit sur lequel l'étape de désorption 125 a été réalisée. L'étape de désorption 125 est réalisée par l'injection de vapeur d'eau sur le lit d'adsorption. Cette injection conduit à une augmentation de température du lit au delà de la température du fonctionnement du lit en adsorption du gaz de synthèse. L'étape de refroidissement 130 du lit, après l'étape de désorption 125 est donc nécessaire.

Le refroidissement du lit d'adsorption est réalisé par injection d'un gaz inerte pour préserver les caractéristiques physico chimiques du lit. Par exemple, un flux de CO₂ est injecté dans le lit, à contre courant ou co-courant.

L'étape de désorption 125 produit, en sortie, de la vapeur d'eau ainsi que des goudrons légers. L'eau et les goudrons légers sont alors envoyés vers un bac de décantation afin de séparer l'eau des goudrons légers. L'eau peut être alors réutilisée pour réaliser le refroidissement du gaz de synthèse, après refroidissement. Les goudrons légers, dont le benzène, le toluène et les xylènes, sont ensuite injectés dans le bac de décantation 135 des impuretés organiques lourdes et de l'eau en provenance du refroidissement du gaz de synthèse. L'apport de goudrons légers permet un fluxage du mélange et d'éviter la formation d'émulsion courante dans les bacs de décantation.

Dans des modes de réalisation, le procédé 10 met en œuvre un seul lit d'adsorption. Dans ces modes de réalisation, le lit d'adsorption réalise d'abord l'étape d'adsorption 110, puis lorsque ce lit est saturé, l'entrée de gaz de synthèse dans le lit est interrompue. Le lit d'adsorption réalise ensuite l'étape de régénération 120 comportant, en outre, l'étape de désorption 125 puis l'étape de refroidissement 130. Une fois refroidit, l'entrée de gaz de synthèse est activée et le lit réalise une nouvelle étape d'adsorption 110.

Dans d'autres modes de réalisation, le procédé 10 met en œuvre deux lits d'adsorption. Dans ces configurations, pendant qu'un lit réalise l'étape d'adsorption 110, l'autre lit réalise l'étape de régénération 120.

Dans des modes de réalisation préférentiels, le procédé 10 met en œuvre trois ou plus lits d'adsorption. Dans ces configurations, pendant qu'un lit réalise l'étape d'adsorption 110, un deuxième lit réalise l'étape de désorption 125 de l'étape de régénération 120 et un troisième lit réalise l'étape de refroidissement 130 de l'étape de régénération 120.

Dans des modes de réalisation, le procédé 10 ne comporte pas d'étape de refroidissement 130.

L'étape de permutation 140 est réalisée, par exemple, par la mise en œuvre d'un commutateur configuré pour commander la réalisation de l'étape de refroidissement 130 sur un lit sur lequel l'étape de désorption 125 a été réalisée.

L'étape de décantation de goudrons 135 est réalisée, par exemple, par la mise en œuvre d'un décanteur. Cette étape de décantation 135 comporte une étape d'injection d'un liquide de lavage ou de fluxage, comme par exemple du méthyle ester de colza, des HAN (pour « Heavy Aromatic Naphta », traduit par « Naphte aromatique lourde ») ou l'un des goudrons légers obtenus par désorption des lits d'adsorption. Ce liquide de lavage accélère la décantation des goudrons. Les goudrons décantés proviennent de l'étape de refroidissement 105. Les goudrons lourds sont accompagnés d'eau condensée également au cours de l'étape de refroidissement 105.

L'étape de refroidissement 145 des produits de la désorption est réalisée, par exemple, avec de l'eau refroidie à une température inférieure à 30°C et plus précisément à une température inférieure à la température de rosée des goudrons lourds.

L'étape 150 de séparation des produits de la désorption refroidis est réalisée, par exemple, par la mise en œuvre d'un séparateur ou d'un décanteur pour l'eau et goudrons légers.

L'étape de séparation 150 est avantageusement suivie d'une étape d'utilisation de l'eau pour l'étape de refroidissement 105, et d'une étape d'utilisation des goudrons légers dans le décanteur eau/goudrons légers.

L'étape de permutation 115 est réalisée, par exemple, par la mise en œuvre d'un commutateur, ou d'une vanne trois voies, configuré pour alimenter un lit d'adsorption non saturé avec le gaz de synthèse en sortie de l'étape de refroidissement 105. Lorsqu'un lit d'adsorption est saturé, le commutateur ferme une vanne d'injection de gaz de synthèse dans ce lit d'adsorption et ouvre une vanne d'injection de gaz de synthèse d'un autre lit d'adsorption, non saturé. Lorsqu'une vanne d'injection est ainsi fermée, une étape de régénération du lit d'adsorption 120 est engagée.

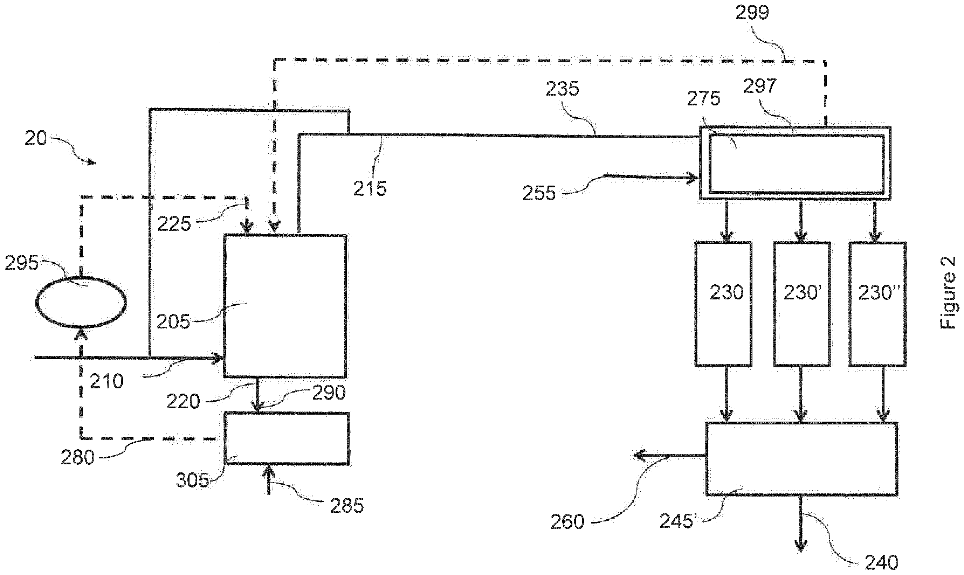

L'étape de permutation 115 permet le traitement du gaz de synthèse en continu tout en permettant de procéder à la régénération de chaque autre lit d'adsorption saturé simultanément au traitement du gaz. Par extension, cette étape de permutation 115 permet de multiplier les circuits de traitement en parallèle. Par exemple, comme il est décrit en figure 2, le procédé 10 peut comporter trois lits d'adsorption en parallèle : un lit en phase d'adsorption, et deux lits en phase de régénération.

Dans des modes de réalisation comportant trois lits, une séquence de mise en œuvre du procédé 10 peut être, par exemple :
- alimentation d'un gaz de synthèse à un premier lit d'adsorption jusqu'à saturation du premier lit,
- lorsque le premier lit est saturé, l'entrée de gaz de synthèse est dirigée vers un deuxième lit d'adsorption et une étape de désorption d'une étape de régénération est réalisée sur le premier lit,
- lorsque le deuxième lit est saturé, l'entrée de gaz de synthèse est dirigée vers un troisième lit d'adsorption, une étape de refroidissement est réalisée sur le premier lit et une étape de désorption d'une étape de régénération est réalisée sur le deuxième lit,
- lorsque le troisième lit est saturé, l'entrée de gaz de synthèse est dirigée vers le premier lit régénéré, une étape de refroidissement est réalisée sur le deuxième lit et une étape de désorption est réalisée sur le troisième lit.

Une fois cette phase d'initialisation réalisée, chaque lit arrivant à saturation est remplacé par un lit régénéré.

On observe, sur la figure 2, un mode de réalisation particulier du dispositif de traitement d'un gaz de synthèse provenant d'un moyen de gazéification de biomasse. Ce dispositif comporte :
- un refroidisseur 205 qui comporte :
   - une entrée 210 pour gaz de synthèse provenant du moyen de gazéification non représenté ;
   - une sortie 215 pour gaz de synthèse refroidi ;
   - une sortie 220 pour les goudrons lourds et pour l'eau et
   - une entrée 225 pour le liquide de refroidissement ;
- des moyens 230, 230' et 230" d'adsorption, directement en sortie du refroidisseur 205, du gaz de synthèse refroidit par un lit d'adsorption qui comporte :
   - une entrée 235 pour gaz de synthèse refroidi ;
   - une sortie pour gaz synthétique épuré et pour eau et goudrons légers et
- un moyen 245 de permutation entre un moyen d'adsorption saturé et un moyen d'adsorption régénéré, comprenant en outre une entrée 255 de liquide de désorption,
- un moyen 245' de séparation entre des goudrons légers et le gaz synthétique épuré comportant une sortie 240 pour gaz synthétique épuré et une sortie 260 pour eau et goudrons légers,
- un séparateur 297 comportant un moyen 275 de décantation de l'eau et des goudrons lourds, issus du refroidisseur, du gaz de synthèse qui comporte :
   - une sortie 280 pour eau ;
   - une entrée 285 pour liquide de lavage et
   - une entrée 290 pour eau et goudrons lourds,
- un moyen 295 de refroidissement de l'eau sortie du moyen 275 de décantation et
- un moyen, 255 et 260, de régénération d'au moins un lit d'adsorption par désorption modulée en température.

Le refroidisseur 205 est, par exemple, une colonne à garnissage, à plateau, de projection thermique (« spray », en anglais) ou à effet Venturi. Ce refroidisseur 205 peut être associé à un échangeur de chaleur ou un moyen de réfrigération du refroidisseur 205. Ce refroidisseur 205 diminue la température du gaz de synthèse pour une pression donnée, par exemple la pression atmosphérique, de manière à atteindre la température du point de rosée des goudrons. Ce refroidisseur 205 comporte une entrée 210 pour gaz de synthèse provenant du moyen de gazéification, qui est, par exemple, une vanne d'injection du gaz de synthèse dans le refroidisseur 205. En entrée dans le refroidisseur 205, le gaz de synthèse est, par exemple, à une température comprise entre 100 °C et 250 °C. Ce refroidisseur 205 comporte également une sortie 215 pour gaz de synthèse refroidit qui est, par exemple, une vanne d'évacuation du gaz de synthèse condensé. En sortie du refroidisseur 205, le gaz de synthèse refroidi est à une température comprise entre 5 °C et 30 °C et de préférence entre 5 °C et 10 °C. Le refroidisseur 205 comporte, de plus, une sortie 220 pour goudrons lourds et eau qui est, par exemple, une vanne d'évacuation. Ces goudrons lourds et cette eau sont le résultat de la condensation du gaz de synthèse entré et correspondant à des impuretés à éliminer pour augmenter le rendement du gaz de synthèse. Enfin, ce refroidisseur 205 comporte une entrée 225 pour eau qui est, par exemple, une vanne d'injection d'eau dans le refroidisseur 205 permettant de réduire la température interne du refroidisseur 205. Cette entrée d'eau 225 permet aussi d'augmenter l'humidité du gaz de synthèse condensé sorti. Dans des variantes, la sortie 215 pour gaz de synthèse condensée est rebouclée sur l'entrée 210 pour gaz de synthèse afin d'augmenter le rendement du refroidisseur 205.

On peut noter que si le liquide utilisé dans le refroidisseur 205 est avantageusement de l'eau, ce liquide peut être remplacé par une huile thermique ou par tout autre liquide de lavage dont les caractéristiques sont compatible avec la présente application.

Le moyen d'adsorption 230 est, par exemple, un lit d'adsorption traversé par le gaz de synthèse refroidit afin de récolter des goudrons légers et des composés inorganiques charriés par le gaz de synthèse. Ce lit d'adsorption comporte, par exemple, des charbons actifs, des zéolites ou des adsorbants polymères. La température de ce lit est configurée pour permettre une adsorption forte des goudrons légers transportés par le gaz de synthèse en sortie du refroidisseur 205. De plus, la température de ce lit est choisie pour permettre une condensation minimale des goudrons transportés. Préférentiellement, le lit d'adsorbant utilise des charbons actifs. Les charbons actifs possèdent, d'une part, une grande affinité avec les composés organiques, comme les goudrons par exemple, et, d'autre part, une capacité d'adsorption vis-à-vis du sulfure d'hydrogène. Or le sulfure d'hydrogène peut atteindre jusqu'à 3% en masse du gaz de synthèse, dans des conditions de pression et de température voisines des conditions de l'atmosphère ambiant. Les conditions opératoires de ce lit d'adsorption sont, d'une part, une température comprise entre 5 °C et 30 °C et de préférence entre 5 °C et 10 °C et, d'autre part, une pression similaire à la pression atmosphérique. Ce moyen 230 d'adsorption comporte une entrée 235 pour gaz de synthèse refroidit qui est, par exemple, une vanne d'injection du gaz de synthèse dans le lit d'adsorption. Ce moyen d'adsorption 230 comporte, de plus, une sortie pour gaz de synthèse épuré, eau et goudrons légers pouvant être alimenté à un moyen de méthanation non représenté.

Avantageusement, le dispositif comporte une pluralité de lits d'adsorption placés en série ou en parallèle. Dans d'autres variantes préférentiellement utilisées et représentées en figure 2, le dispositif 10 comporte une pluralité de lits d'adsorption utilisés alternativement. De cette manière, lorsqu'un lit d'adsorption est saturé en impuretés, le moyen de permutation 245 permute l'injection du gaz de synthèse depuis un lit d'adsorption saturé vers un lit d'adsorption régénéré. Plus généralement, ce moyen de permutation 245 est un commutateur configuré pour diriger le flux de gaz de synthèse condensé vers au moins un lit d'adsorption non saturé. Lorsqu'un lit d'adsorption est saturé, le moyen 245 de permutation ferme la vanne 235 d'injection de gaz de synthèse vers ce lit d'adsorption, et un processus de régénération de ce lit d'adsorption est engagé. Dans des modes de réalisation préférentiels, le dispositif 10 comporte trois lits d'adsorption.

Le dispositif 20 comporte un séparateur 297 entre l'eau et les goudrons légers. Ce séparateur 297 comporte un décanteur 275 qui comporte une sortie 299 pour l'eau et une sortie (non représentée) pour les goudrons légers.

La désorption d'un lit d'adsorption 230 est réalisée par l'injection d'un fluide de désorption adapté pour lessiver les impuretés adhérentes sur le lit d'adsorption. De préférence, la désorption du lit d'adsorption 230 est effectuée par injection de vapeur surchauffée à une température comprise entre 110°C et 250°C et avec un débit volumique de vapeur surchauffée 3 à 5 fois inférieur au débit volumique de gaz de synthèse. Ainsi, la désorption est réalisée en un temps inférieur ou égal au temps de saturation du lit d'adsorption.

Le dispositif 20 comporte, de plus, un décanteur 305 supplémentaire pour goudrons lourds issus du refroidisseur 205.

D'autres fluides gazeux comme un gaz pur ou un mélange de gaz choisi parmi CO₂, CH₄, H₂, CO à une température comprise entre 110°C et 250°C et avec un débit volumique de gaz 3 à 5 fois inférieur au débit volumique de gaz de synthèse sont également utilisables.

Le moyen 245 de permutation comporte une entrée 255 pour vapeur d'eau qui est, par exemple, une vanne d'injection de vapeur d'eau chauffée à 140 °C. Les lits d'adsorption sont munis d'une sortie 260 pour goudrons légers et pour vapeur d'eau qui est, par exemple, une vanne d'évacuation des goudrons légers et de vapeur d'eau pilotée en adéquation avec le moyen 245 de permutation.

Dans des variantes, après qu'un lit d'adsorption ait subit une désorption, ce lit est ensuite refroidit grâce à un moyen de refroidissement, tel un échangeur thermique par exemple ou par injection d'un gaz inerte dans le lit d'adsorption de préférence du CO₂ qui évite les pics de dégradation de la qualité du gaz de synthèse. Dans ces variantes, le dispositif 10 peut également comporter un moyen de permutation entre un lit ayant subit une désorption et un lit ayant subit un refroidissement. Ce moyen de permutation est, par exemple, un moyen de commande configuré pour commander la désorption ou le refroidissement d'un lit. Dans d'autres variantes, chaque lit d'adsorption réalise le cycle adsorption, désorption puis refroidissement de manière à ce qu'un seul lit réalise, à un moment donné, l'une des étapes de ce cycle.

Le moyen de décantation 275 est, par exemple, un bac de décantation permettant l'élimination de goudrons. Ce moyen de décantation 275 comporte également une entrée 290 pour eau et pour goudrons lourds issus du refroidisseur 205 qui est, par exemple, une vanne d'injection. Ce moyen de décantation 275 comporte, de plus, une entrée 285 pour liquide de lavage qui est, par exemple, une vanne d'injection de méthylester de colza. Ce moyen de décantation 275 comporte, enfin, une sortie 280 pour eau qui est, par exemple, une vanne d'évacuation d'eau du bac de décantation.

Le dispositif comporte, en outre, un moyen 295 de refroidissement de l'eau sortie du moyen de décantation 275, qui est, par exemple, un échangeur de chaleur configuré pour faire baisser la température de l'eau de 30 °C vers 20 °C et préférentiellement entre 5 °C et 10 °C. Cette eau est ensuite retournée à l'entrée d'eau 225 du refroidisseur 205.

Le procédé donné en illustration de l'invention est particulièrement adapté à la production de syngas à partir de biomasse. Toutefois, ce procédé peut être aisément adapté à l'épuration de syngas provenant de la gazéification d'autres média, dont le charbon.

## Revendications

1. Procédé (10) de traitement d'un gaz de synthèse provenant d'une étape de gazéification, **caractérisé en ce qu'**il comporte :
- une étape (105) de condensation des impuretés organiques lourdes et de l'eau par refroidissement du gaz de synthèse,
- une étape (110) d'adsorption, en sortie de l'étape de refroidissement, d'impuretés organiques légères et d'impuretés inorganique par au moins un lit d'adsorption (230),
- une étape (155) de séparation par décantation (135) de l'eau et des goudrons lourds issus de l'étape (105) de refroidissement du gaz de synthèse et
- une étape (120) de régénération d'au moins un lit d'adsorption (230) par désorption modulée en température comportant une étape d'injection d'un gaz chaud contre chaque dit lit d'adsorption, le gaz chaud étant de la vapeur surchauffée ou un gaz pur ou un mélange de gaz choisi parmi CO2, CH4, H2, CO à une température comprise entre 110°C et 250°C et avec un débit volumique de vapeur surchauffée ou gaz 3 à 5 fois inférieur à un débit volumique de gaz de synthèse.

2. Procédé (10) selon la revendication 1, qui comporte une étape (160) de refroidissement de l'eau de décantation, issue de l'étape de séparation (155), entre 5°C et 30°C, l'eau de décantation refroidie étant utilisée pour l'étape (105) de refroidissement du gaz de synthèse.

3. Procédé (10) selon la revendication 2, dans lequel, au cours de l'étape (160) de refroidissement de l'eau, l'eau de décantation issue de l'étape (155) de séparation est refroidie entre 5°C et 10°C.

4. Procédé (10) selon l'une des revendications 1 à 3, dans lequel une partie des produits issus de l'étape de régénération (120) est utilisée dans l'étape (155) de séparation par décantation.

5. Procédé (10) selon l'une des revendications 1 à 4, dans lequel l'étape de régénération (120) est effectuée simultanément, au moins partiellement, à l'étape (110) d'adsorption.

6. Procédé (10) selon l'une des revendications 1 à 5, dans lequel l'étape de régénération comporte une étape de refroidissement d'un lit d'adsorption (230) qui est effectuée simultanément, au moins partiellement, à l'étape (110) d'adsorption et simultanément, au moins partiellement, à l'étape (125) de désorption d'un lit d'adsorption (230).

7. Procédé (10) selon l'une des revendications 1 à 6, qui comporte une étape (115) de permutation entre un premier lit d'adsorption (230) réalisant l'étape d'adsorption (110) et au moins un deuxième lit d'adsorption (230', 230") réalisant une étape de régénération (120).

8. procédé (10) selon l'une des revendications 1 à 7, dans lequel la régénération (120) du lit d'adsorption est réalisé par injection d'un gaz inerte dans le lit d'adsorption.

## Patentansprüche

1. Verarbeitungsverfahren (10) eines aus einem Vergasungsschritt stammenden Synthesegases, **dadurch gekennzeichnet, dass** es umfasst:
- einen Schritt (105) zum Kondensieren der schweren organischen Verunreinigungen und des Wassers per Kühlung des Synthesegases,
- einen Schritt (110) zum Adsorbieren von leichten organischen Verunreinigungen und anorganischen Verunreinigungen am Ausgang des Schritts zum Kühlen durch wenigstens ein Adsorptionsbett (230),
- einen Schritt (155) zum Abscheiden per Dekantierung (135) des Wassers und der schweren Teere, die aus dem Schritt (105) zum Kühlen des Synthesegases hervorgegangen sind, und
- einen Schritt (120) zum Regenerieren wenigstens eines Adsorptionsbettes (230) per modulierter Desorption unter Temperatur, umfassend einen Einschussschritt eines heißen Gases gegen das genannte Adsorptionsbett, wobei das heiße Gas überhitzter Dampf oder ein reines Gas oder eine Gasmischung ist, die aus CO2, CH4, H2, CO ausgewählt ist, bei einer zwischen 110°C und 250°C inbegriffenen Temperatur und mit einem überhitztem Dampf- oder Gas-Volumendurchsatz, der 3 bis 5 Mal niedriger ist als ein Synthesegas-Volumendurchsatz.

2. Verfahren (10) gemäß Anspruch 1, das einen Abkühlschritt (160) des aus dem Schritt zum Abscheiden (155) stammenden Dekantierungswassers auf zwischen 5° C und 30° C umfasst, wobei das abgekühlte Dekantierungswasser für den Schritt (105) zum Abkühlen des Synthesegases verwendet wird.

3. Verfahren (10) gemäß Anspruch 2, bei dem im Verlauf des Abkühlschritts (160) des Wassers das aus dem Schritt (155) zum Abscheiden stammenden Wassers auf zwischen 5° C und 10° C abgekühlt wird.

4. Verfahren (10) gemäß einem der Ansprüche 1 bis 3, bei dem ein Teil der aus dem Regenerierungsschritt (120) stammenden Produkte bei dem Schritt (155) zum Abscheiden per Dekantierung verwendet wird.

5. Verfahren (10) gemäß einem der Ansprüche 1 bis 4, bei dem der Regenerierungsschritt (120) wenigstens teilweise gleichzeitig mit dem Adsorptionsschritt (110) durchgeführt wird.

6. Verfahren (10) gemäß einem der Ansprüche 1 bis 5, bei dem der Regenerierungsschritt einen Abkühlschritt eines Adsorptionsbettes (230) umfasst, der wenigstens teilweise gleichzeitig mit dem Adsorptionsschritt (110) und wenigstens teilweise gleichzeitig mit dem Desorptionsschritt (125) eines Adsorptionsbettes (230) durchgeführt wird.

7. Verfahren (10) gemäß einem der Ansprüche 1 bis 6, das einen Schritt (115) zur Permutation zwischen einem ersten Adsorptionsbett (230), das den Adsorptionsschritt (110) durchführt, und wenigstens einem zweiten Adsorptionsbett (230', 239"), das einen Regenerierungsschritt (102) durchführt, umfasst.

8. Verfahren (10) gemäß einem der Ansprüche 1 bis 7, bei dem die Regeneration (120) des Adsorptionsbettes per Einschießen eines inerten Gases in das Adsorptionsbett durchgeführt wird.

## Claims

1. Method (10) for treating a synthesis gas issued from a gasification step, which comprises:
- a step (105) of condensing heavy organic impurities and water by cooling the synthesis gas;
- a step (110) of the adsorption of light organic impurities and inorganic impurities by at least one adsorption bed (230), on exiting the cooling step;
- a step (155) of separating by decantation (135) the water and heavy tars from the synthesis gas cooling step (105); and
- a step (120) of regenerating at least one adsorption bed (230) by temperature-modulated desorption comprising a step of injecting a hot gas against each said adsorption bed, the hot gas being superheated vapor, a pure gas or a gas mixture chosen from CO2, CH4, H2, CO, at a temperature of 110°C to 250°C and with a volumetric flow rate of the superheated vapor or gas that is 3 to 5 times less than a synthesis gas volumetric flow rate.

2. Method (10) according to claim 1, which comprises a step (160) of cooling the decantation water, from the separation step (155), to between 5°C and 30°C, the cooled decantation water being used for the synthesis gas cooling step (105).

3. Method (10) according to claim 2, wherein, during the water cooling step (160), the decantation water from the separation step (155) is cooled to between 5°C and 10°C.

4. Method (10) according to one of claims 1 to 3, wherein a portion of the products from the regeneration step (120) is used in the step (155) of separation by decantation.

5. Method (10) according to one of claims 1 to 4, wherein the regeneration step (120) is carried out at least partially at the same time as the adsorption step (110).

6. Method (10) according to one of claims 1 to 5, wherein the regeneration step comprises a step of cooling an adsorption bed (230), which is carried out at least partially at the same time as the adsorption step (110), and at least partially at the same time as the step (125) of desorbing an adsorption bed (230).

7. Method (10) according to one of claims 1 to 6, which comprises a step (115) of switching between a first adsorption bed (230) carrying out the adsorption step (110) and at least one second adsorption bed (230', 230") carrying out a regeneration step (120).

8. Method (10) according to one of claims 1 to 7, wherein the regeneration (120) of the adsorption bed is carried out by injecting an inert gas into the adsorption bed.
